Europäisches Patentamt

(19) European Patent Office

Office européen des brevets

(11) Publication number: **0 185 627**
**A1**

(12) **EUROPEAN PATENT APPLICATION**

(21) Application number: **85830307.6**

(22) Date of filing: **17.12.85**

(51) Int. Cl.⁴: **H 01 M 2/30**
**H 01 R 11/26**

(30) Priority: **21.12.84 IT 2421184 U**

(43) Date of publication of application:
**25.06.86 Bulletin 86/26**

(84) Designated Contracting States:
**AT BE CH DE FR GB LI NL SE**

(71) Applicant: **Martines, Giuseppe**
**Via Manzoni, 23/D**
**I-20040 Busnago Milano(IT)**

(72) Inventor: **Martines, Giuseppe**
**Via Manzoni, 23/D**
**I-20040 Busnago Milano(IT)**

(74) Representative: **Cicogna, Franco**
**Ufficio Internazionale Brevetti Dott.Prof. Franco Cicogna**
**Via Visconti di Modrone, 14/A**
**I-20122 Milano(IT)**

(54) **Storage battery clamp structure provided with a quick operating device.**

㊄ The invention relates to a clamp or teminal structure for storage batteries, provided with a quick operating device comprising a jaw body (2) to be coupled to a terminal of the storage battery and rigid with a sleeve member to be coupled to an electric cable, at the end of the jaw body (2) there being provided two throughgoing seats provided with opposite threads effective to be coupled with oppositely threaded portions of a fixing tie rod.

Fig. 1

EP 0 185 627 A1

The present invention relates to a clamp structure for storage batteries, provided with a quick operating device.

As is known, the clamp members for coupling electrical cables to the terminals of storage batteries are generally formed by a jaw body, which encompasses the battery terminal and which is clamped by means of a bolt member to be operated by a wrench or the like.

That configuration involves a comparatively long time for clamping and opening the clamp itself.

This fact is a particularly important one in the case therein the battery has to be quickly disconnected, for example in the case of shorts through the electric system, susceptible to cause great over-heatings, because of the great current flowing through the wires.

With the known solutions great damages may occur to the electric system, because of the mentioned long time necessary for the disconnection.

Accordingly, the task of the present invention is to overcome the above mentioned drawbacks, by providing such a clamp structure for storage batteries which may be coupled to the battery terminal, and disconnected therefrom, in a very short time, without the need of using any tools or means.

Within the above mentioned task, it is a main object of the present invention to provide such a clamp structure which, without using any tools or means, may be firmly clamped on the battery terminal, in such a way as to assure a precise and even electric contact.

Another object of the present invention is to provide such a clamp structure for storage batteries, which is provided with a quick operating device which, owing to its constructional features , is effective to assure a safe and reliable operation.

Yet another object of the present invention is to provide such a clamp structure which may be made starting from easily available elements and materials and which, in addition, is of a comparatively low cost.

Yet another object of the present invention is to provide such a clamp which may be fitted to different size terminal storage batteries.

According to one aspect of the present invention, the above task and objects, as well as yet other objects which will become more apparent thereinafter, are achieved by a clamp for storage batteries, provided with a quick operating device, comprising a jaw body to be coupled to a terminal of the storage battery and rigid with a sleeve member to be fixed to an electric cable, characterized in that it comprises, at the ends of the jaw body two throughgoing seats provided with opposite threads and effective to be coupled to oppositely threaded portions of a clamping tie rod.

Further characteristics and avantages of the present invention will become more apparent thereinafter from the following detailed description of a clamp structure for storage batteries with a quick operating device, being illustrated, by way of an indicative but not limitative example in the accompanying drawings, where:

fig.1 is a perspective schematic view illustrating the clamp structure according to the present invention, before the coupling thereof to a terminal of a storage battery;

fig.2 is a top view illustrating the clamp structure according to the invention as
applied to the battery terminal;
and

fig.3 illustrates a top view showing
the clamp structure according to the invention in the
disconnecting step from the battery terminal.

With reference to the figures, the clamp
structure for storage batteries provided with a quick
operating device according to the present invenčjon,
which is indicated overally at 1, comprises a jaw
body 2 which, as is conventional, has a substantially
circular shape with an interrupted portions at two
ear formations 3, parallely spaced from one another.

Rigid with the jaw body 2, there is provided a sleeve member 4 thereto an electric cable 6 may
be coupled, by means of screws 5, for coupling the
storage battery to the electric system.

A main feature of the invention is that,
at the ear formations 3, arranged at the ends of the
jaw body 2, there are formed throughgoing seats 10,
having oppositely directed threads, which are axially
aligned.

The mentioned threaded seats 10 engage with oppositely threaded portions, indicated at 11, which are formed on a tie rod element, indicated overally by the reference number 12.

The provision of a double threaded coupling between the tie rod 12 and jaw body 2, is such that, as the tie rod 12 is rotated, a double spread-apart effect on the jaw body is obtained, because of the spreading apart of a jaw leg and the spreading apart of the other jaw leg.

Likewise, during the closure step, a quicker clamping will be obtained.

In order to open and close the clamp, without the need of using tools, with the tie rod 12, preferably made of a single piece, there is coupled a handle lever 13, which radially extends with respect to the tie rod and provides a long lever arm in order to provide a proper force both during the clamp opening step and during the closing step of said clamp 1 on the terminal 20 of the storage battery.

Advantageously, the lever 13 may be coated by a thermally insulating material, in order to assure to the user the greatest safety and comfort as the clamp has to be disconnected, for example because of a short in the electric system.

Advantageously, the tie rod element 12 is provided with threads effective to afford the possibility to pass from the opened condition to the fully closed condition, by a rotation through substantially 180°.

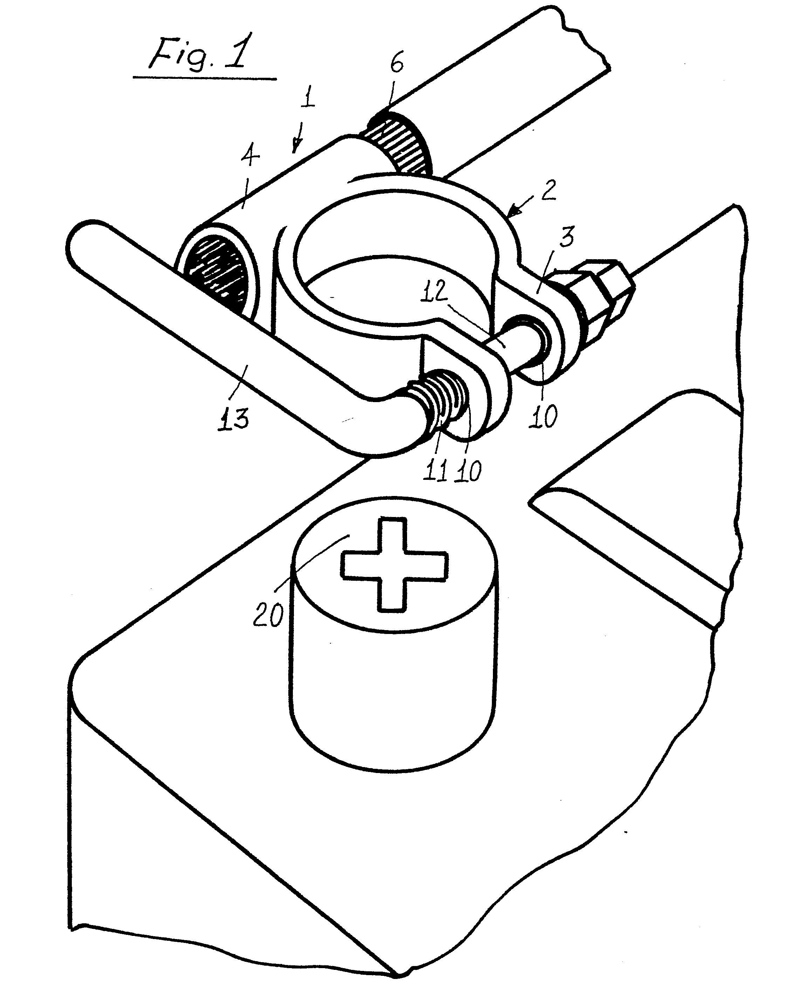

As is shown in figure 1, in order to connect the clamp, the jaws of the jaw body 2 are held in a spaced away condition and then, after having applied it on the battery terminal, the clamp will be closed by turning the lever.

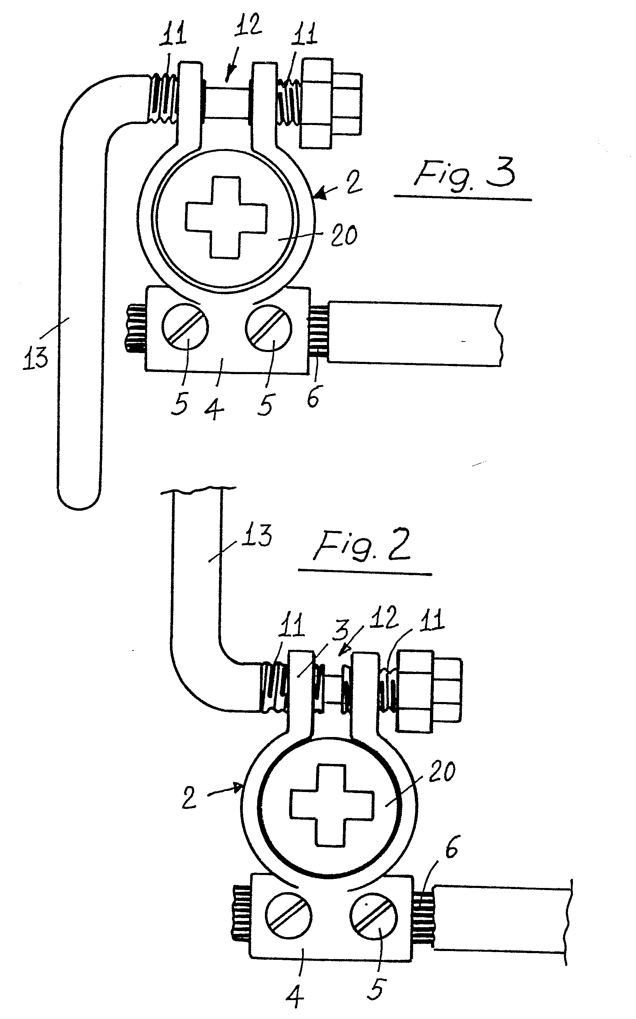

In order to disengage the clamp, as it is shown in figure 3, it will be sufficient to rotate the lever in the opposite direction, in such a way as to cause said jaws to immediately disengage from the terminal 20.

Moreover, the provision of a threaded engagement between the ends of the jaw body 2 and tie rod, causes, during the disconnection step, said jaw body to be also disengaged from the terminal 20.

In practicing the invention, the used materials provided that they are compatible with the intended
use,as well as the size and specific shapes,may be
any,according to requirements.

C L A I M S

1- A clamp for storage batteries, provided with a quick operating device, comprising a jaw body to be coupled to a terminal of the storage battery and rigid with a sleeve member to be fixed to an electric cable, characterized in that it comprises, at the ends of the jaw body, two throughgoing seats provided with opposite threads and effective to be coupled to oppositedly threaded portions of a clamping tie rod.

2- A clamp for storage batteries with a quick operating device, according to the preceding claim, characterized in that said throughgoing seats with opposite threads are formed on ear formations spaced from one another and oppositely arranged, said ear formations being provided at the ends of the jaw body.

3- A clamp for storage batteries with a quick operating device according to one or more of the preceding claims, characterized in that it comprises an operating lever extending substantially perpendicularly from said clamping tie rod.

0185627


4- A clamp for storage batteries with a quick operating device, according to one or more of the preceding claims, characterized in that it comprises a thermally insulating coating at said operating lever.

5- A clamp for storage batteries, provided with a quick operating device, according to the preceding claims, ans substantially as broadly disclosed and illustrated

for the intended objects.

Fig. 1

_Fig. 3_

_Fig. 2_

## EUROPEAN SEARCH REPORT

| DOCUMENTS CONSIDERED TO BE RELEVANT | | | EP 85830307.6 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | US - A - 2 818 552 (ZAM) <br> * Fig. 2; claim * <br> -- | 1-4 | H 01 M 2/30 <br> H 01 R 11/26 |
| X | US - A - 2 769 964 (LARTZ) <br> * Fig. 5; column 4, lines 9-38 * <br> -- | 1-3 | |
| X | US - A - 2 618 675 (LALLMANG) <br> * Fig. 1; column 1, line 30 - column 2, line 47 * <br> -- | 1-3 | |
| X | US - A - 2 299 291 (ZAM) <br> * Fig. 1,2; column 1, line 25 - column 2, line 20 * <br> -- | 1-3 | **TECHNICAL FIELDS SEARCHED (Int. Cl.4)** |
| X | US - A - 3 973 820 (BENSON) <br> * Fig. 2; column 2, line 52 - column 3, line 22 * <br> ---- | 1-3 | H 01 M <br> H 01 R |

The present search report has been drawn up for all claims

| Place of search | Date of completion of the search | Examiner |
|---|---|---|
| VIENNA | 18-03-1986 | LUX |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82